# EUROPÄISCHE PATENTSCHRIFT

(11) **EP 2 389 063 B1**
(45) Veröffentlichungstag und Bekanntmachung des Hinweises auf die Patenterteilung: **24.10.2012**
(21) Anmeldenummer: 10700495.4
(22) Anmeldetag: 13.01.2010
(51) Int. Cl.: F25D 25/00, A01N 1/00, A01N 1/02, F25D 3/10

(54) **KRYOBEHÄLTER**
CRYOGENIC CONTAINER
CONTENANT CRYOGÉNIQUE

(30) Priorität: 20.01.2009 EP 09150937
(43) Veröffentlichungstag der Anmeldung: 30.11.2011
(73) Patentinhaber: F. Hoffmann-La Roche AG, 4070 Basel (CH)
(72) Erfinder: ARNITZ, Theo, 68753 Waghäusel (DE); LIEBIG, Carsten, 52066 Aachen (DE)
(74) Vertreter: Stößel, Matthias
(86) Internationale Anmeldenummer: PCT/EP2010/000117
(87) Internationale Veröffentlichungsnummer: WO 2010/083951

(56) Entgegenhaltungen:
- EP-B- 1 441 585
- WO-A-02/16209
- WO-A-91/03934
- DE-A1- 10 151 343
- US-A- 5 943 876
- US-B2- 7 104 074

## Beschreibung

### Gebiet der Erfindung

Die Erfindung betrifft einen Kryobehälter, welcher insbesondere zum Lagern und/oder Transportieren eines Mediums geeignet ist. Insbesondere ist der Kryobehälter geeignet zum Lagern und/oder Transportieren eines biochemischen und/oder medizinischen Produkts. Weiterhin betrifft die Erfindung einen Sekundärbehälter zur Verwendung in einem erfindungsgemäßen Kryobehälter sowie eine Präparationsvorrichtung zum Einlagern eines Mediums. Weiterhin betrifft die Erfindung ein Verfahren zum Lagern und/oder Transportieren eines Mediums, insbesondere wiederum eines biochemischen Produkts. Derartige Vorrichtungen und Verfahren können insbesondere im Bereich der Herstellung und/oder Bereitstellung pharmazeutischer und/oder diagnostischer Produkte verwendet werden, welche insbesondere bei Raumtemperatur allgemein in flüssiger Form vorliegen, welche jedoch für eine Lagerung und/oder einen Transport in der Regel eingefroren werden.

### Stand der Technik

Bei der Herstellung und/oder Bereitstellung von Medien, insbesondere Medien mit Wirkstoffen für die Diagnostik und/oder die medizinische Therapeutik, d.h. insbesondere Medizinprodukten und/oder Pharmazeutika, liegt eine technische Herausforderung in einer geeigneten Handhabung der Medien. In vielen Fällen werden in der galenischen Produktion von beispielsweise biotechnischen Wirkstoffen die Medien zur Lagerung und/oder zum Transport eingefroren. Zum Einfrieren und anschließenden Auftauen werden dabei in der Regel Kryogefäße verwendet, welche auch als "Cryo-Vessels" bezeichnet werden. Diese Kryobehälter sind in der Regel massive Edelstahlbehälter mit Doppelmantel. Über einen Silikonölkreislauf wird das Produkt in den Behältern eingefroren und/oder aufgetaut. Die Sterilanforderungen für derartige Kryobehälter sind jedoch, insbesondere für biotechnische Wirkstoffe, sehr hoch.

Ein entscheidender Nachteil der bekannten Technologie in dieser Art ist, dass nach beendeter Verwendung des Behälters eine Reinigung und Sterilisation notwendig ist. Dies ist sehr zeit- und kostenaufwändig. Weiterhin kann es vorkommen, dass an den Kupplungsstellen, an welchen eine Silikonöl-Versorgung des Silikonölkreislaufs erfolgt, Silikonöl austritt. Darüber hinaus sind große Lagerflächen erforderlich, verbunden mit einer hohen Bindung von Kapital. Eine Flexibilität hinsichtlich eines variablen Bedarfs ist in der Regel nicht gegeben.

Diese Sterilanforderungen machen in der Regel einen Kreislaufbetrieb der Kryobehälter erforderlich, welcher einen enormen Transport- und Lageraufwand verursacht. So müssen insbesondere die Kryobehälter, welche ein erhebliches Gewicht aufweisen (teilweise mehrere hundert Kilogramm) und welche ein großes Volumen von teilweise mehreren Kubikmetern aufweisen, eingelagert und transportiert werden.

Neben diesen Mehrweg-Kryobehältern sind aus dem Stand der Technik auch Vorrichtungen bekannt, bei welchen das Medium in einen Einweg-Beutel eingebracht und darin eingefroren wird. Beispielsweise zeigen die US 7,104,074 B2 und die EP 1 441 585 B1 Behälter zum Einfrieren, Speichern und Auftauen biopharmazeutischer Materialien, welche in einem Stützrahmen aufnehmbar sind. In diesen Folienbehältern wird das biopharmazeutische Material mittels eines Kontakt-Wärmetransfers zu einer Wärmetransferoberfläche eingefroren.

Nachteilig an diesem Stand der Technik ist jedoch, dass derartige Behälter vergleichsweise dünnwandig ausgestaltet sein müssen, um ein schnelles Einfrieren der biopharmazeutischen Materialien ohne Phasenseparation zu ermöglichen. Gleichzeitig sind derartige dünnwandige Behältnisse jedoch äußerst empfindlich gegenüber mechanischen Beschädigungen, so dass unter Umständen ein sicherer, beschädigungsfreier und dennoch steriler Transport in vielen Fällen nicht gewährleistet werden kann. Zudem sind aufwändige Transport- und Lagervorrichtungen erforderlich, um ein Einlagern und einen Transport der Materialien im gefrorenen Zustand zu gewährleisten.

### Aufgabe der Erfindung

Es ist daher eine Aufgabe der vorliegenden Erfindung, Vorrichtungen und Verfahren zum Lagern und/oder Transportieren von Medien bereitzustellen, welche die Nachteile bekannter Vorrichtungen und Verfahren vermeiden. Insbesondere sollen die Vorrichtungen und Verfahren die Logistik der Lagerung und/oder des Transports der Medien vereinfachen und dennoch den Sterilitäts- und Sicherheitsanforderungen genügen, welche üblicherweise in der galenischen Produktion von biotechnischen Wirkstoffen gestellt werden.

### Offenbarung der Erfindung

Diese Aufgabe wird durch Vorrichtungen und Verfahren mit den Merkmalen der unabhängigen Ansprüche gelöst. Vorteilhafte Weiterbildungen der Erfindung, welche einzeln oder in Kombination realisiert werden können, sind in den abhängigen Ansprüchen dargestellt. Dabei werden Vorrichtungen vorgeschlagen sowie Verfahren, welche insbesondere unter Verwendung der beschriebenen Vorrichtungen durchgeführt werden können. Es kann daher bezüglich möglicher Ausgestaltungen des Verfahrens auf die beschriebenen Ausgestaltungen der Vorrichtungen verwiesen werden und umgekehrt.

Ein Gedanke der vorliegenden Erfindung besteht darin, ein Einfrieren und/oder Auftauen eines Mediums in einem Wärmetauscher durchzuführen, welcher vorzugsweise nach dem Prozess vollständig entsorgt werden kann. Weiterhin besteht ein Gedanke der vorliegenden Erfindung darin, vorzugsweise bekannte Wärmetauschermedien wie Silikonöl durch kostengünstigere Wärmetauschermedien zu ersetzen, wie beispielsweise flüssigen Stickstoff als Wärmeträger.

Es wird daher ein Kryobehälter zum Lagern und/oder Transportieren eines Mediums, insbesondere eines biochemischen und/oder medizinischen Produkts, vorgeschlagen. Das Medium kann insbesondere, wie oben beschrieben, bei Raumtemperatur flüssig ausgestaltet sein, kann jedoch im gefrorenen, d.h. festen, Zustand gelagert und/oder transportiert werden. Insbesondere kann das Medium aus dem Bereich der oben beschriebenen medizinischen Diagnostik und/oder der Pharmazie entnommen sein. Insbesondere kann es sich um ein Medium handeln, bei welchem erhöhte Anforderungen hinsichtlich der Reinheit und/oder Sterilität gegeben sind. Vorzugsweise werden als Medium biotechnische Wirkstoffe verwendet, bzw. Medien, welche derartige biotechnische Wirkstoffe umfassen. Auch andere Arten von Medien, insbesondere bei Raumtemperatur fluide Medien, beispielsweise flüssige und/oder möglicherweise auch gasförmige Medien, sind jedoch grundsätzlich verwendbar.

Im Rahmen der vorliegenden Erfindung wird mehrfach der Begriff "Behälter" verwendet. So ist dieser Begriff beispielsweise bereits Bestandteil des Begriffs "Kryobehälter". Weiterhin umfasst der Kryobehälter, wie unten noch ausgeführt wird, mindestens einen Primärbehälter sowie mindestens einen Sekundärbehälter, also ebenfalls bestimmte Formen von Behältern. Unter einem Behälter wird dabei im Rahmen der vorliegenden Erfindung, wie für den Fachmann unmittelbar verständlich und wie im allgemeinen Sprachgebrauch üblich, allgemein eine Vorrichtung verstanden, die in ihrem Inneren mindestens einen Innenraum oder Hohlraum (beide Begriff werden im Folgenden im Wesentlichen synonym verwendet) aufweist. Der Innenraum kann insbesondere dem Zweck dienen, den in dem Innenraum aufgenommenen optionalen Inhalt des Behälters vollständig oder teilweise von seiner Umwelt zu trennen. Insbesondere kann der Behälter zu diesem Zweck mindestens eine Behälterwand aufweisen, vorzugsweise eine im Wesentlichen geschlossene Behälterwand, welche diese Trennung von der Umwelt bewerkstelligen kann und welche gleichzeitig dem Zweck dienen kann, den Inhalt des Behälters mechanisch zu stabilisieren, beispielsweise gegenüber einem Herausfallen aus dem Hohlraum. Der Behälter kann mindestens eine Öffnung und/oder mindestens einen Zugang aufweisen, welche, wie noch näher ausgeführt wird, auch verschließbar ausgestaltet sein kann und welche einen Zugang zu dem Hohlraum ermöglichen kann. Die optionale Öffnung ist jedoch nicht derart bemessen, dass diese die Funktionen des Behälters, also insbesondere die Trennung des Inhalts von der Umwelt und die mechanische Stabilisierung und Lagerungsfunktion des Inhalts, zunichte macht.

Insofern unterscheidet sich ein Behälter beispielsweise von einer einfachen Aufhängung oder einem Gestell, aus welchem der Inhalt aufgrund fehlender Umschließung ohne weiteres herausfallen kann. Insbesondere unterscheidet sich ein Behälter somit von einem Stützrahmen, wie er beispielsweise in den eingangs erwähnten US 7,104,074 B2 und EP 1 441 585 B1 beschrieben ist. Derartige Stützrahmen weisen keinen von einer Behälterwand umgebenen Innenraum auf, welcher die genannten Funktionen einer Abschirmung gegenüber einer Umgebung und einer mechanischen Stabilisierung erfüllt.

Unter einem Kryobehälter ist im Rahmen der vorliegenden Erfindung allgemein ein Behälter zu verstehen, der eingerichtet ist, um in seinem Innenraum Gegenstände, beispielsweise Flüssigkeiten und/oder Festkörper, bei niedrigen Temperaturen zu lagern, insbesondere bei Temperaturen unterhalb von 0°C.

Der Kryobehälter umfasst mindestens einen Primärbehälter, welcher mindestens einen flexiblen Folienbeutel aufweist. Unter einem flexiblen Folienbeutel ist dabei eine Vorrichtung zu verstehen, welche mindestens einen Innenraum zur Aufnahme des Mediums aufweist, welcher vorzugsweise im Wesentlichen geschlossen ist. Beispielsweise kann dieser Folienbeutel als rechteckiger Folienbeutel ausgestaltet sein.

Unter einer Flexibilität ist dabei allgemein im Rahmen der vorliegenden Erfindung, wie im allgemeinen Sprachgebrauch üblich, eine Verformbarkeit oder Biegbarkeit eines Körpers zu verstehen. Ohne Angabe weiterer Messbedingungen soll sich der Begriff Flexibilität, wie ebenfalls allgemein üblich, auf eine Messung bei Raumtemperatur und Normaldruck beziehen. Vorzugsweise kann jedoch auch eine Flexibilität bei niedrigeren Temperaturen gegeben sein, beispielsweise bei Temperaturen bis hinunter zu 5°C, vorzugsweise bis 0°C und besonders bevorzugt auch noch bei niedrigeren Temperaturen, beispielsweise bis - 10°C oder sogar noch tieferen Temperaturen, beispielsweise -20°C.

Unter einer Flexibilität des Folienbeutels ist dabei eine Flexibilitäts-Eigenschaft des Folienbeutels zu verstehen, welche sich auf den gesamten Folienbeutel oder lediglich auf Teile dieses Folienbeutels bezieht, beispielsweise Folienwände dieses Folienbeutels, und bei welcher sich diese flexiblen Bestandteile unter Krafteinwirkung plastisch oder elastisch verformen können. Beispielsweise kann diese Krafteinwirkung eine Volumenausdehnung des Mediums selbst sein, welches in den Innenraum des Folienbeutels eingefüllt wird, so dass sich die Wände des flexiblen Folienbeutels verformen.

Der Primärbehälter ist vorzugsweise zumindest teilweise als Einweg-Folienbeutel ausgestaltet. Beispielsweise lassen sich hierfür standardisierte Folienbeutel verwenden, welche als "Bags" im Bereich der Biotechnologie und Medizin üblich sind. Derartige Folienbeutel können beispielsweise ganz oder teilweise aus einem Kunststoffmaterial hergestellt sein und können ein oder mehrere Anschlüsse umfassen, beispielsweise Anschlüsse zum Anschließen einer oder mehrerer Schlauchverbindungen. Beispiele werden unten näher ausgeführt.

Der flexible Folienbeutel ist zur Aufnahme des Mediums eingerichtet und ist vorzugsweise zumindest weitgehend, vorzugsweise vollständig, flüssigkeitsdicht.

Weiterhin umfasst der Kryobehälter mindestens einen den Primärbehälter zumindest teilweise umschließenden Sekundärbehälter, welcher ebenfalls vorzugsweise zumindest teilweise flexibel ausgestaltet ist. Unter einer flexiblen Ausgestaltung hinsichtlich des Sekundärbehälters ist dabei zu verstehen, dass dieser sich vorzugsweise ganz oder teilweise der Form des gefüllten und in den Sekundärbehälter eingebrachten Primärbehälters anpassen kann. Auf diese Weise ist durch eine Anpassung des Sekundärbehälters an den Primärbehälter ein besonders guter Wärmeübertrag gewährleistbar. Der Sekundärbehälter weist mindestens eine Öffnung zum Einführen des Primärbehälters auf. Diese Öffnung kann dauerhaft geöffnet sein, kann jedoch auch derart eingerichtet sein, dass diese zum Einbringen und/oder Ausbringen des Primärbehälters ins Innere des Sekundärbehälters geöffnet werden kann und ansonsten vorzugsweise verschließbar ist.

Der Sekundärbehälter weist mindestens eine vorzugsweise zumindest teilweise flexibel ausgestaltete Außenhülle auf, also eine Außenhülle, welche vorzugsweise unter Krafteinwirkung plastisch oder elastisch verformbar ist. Bezüglich des Begriffs Flexibilität kann allgemein auf die obige Beschreibung des Begriffs verwiesen werden. Unter "zumindest teilweise flexibel" ist dabei allgemein eine Eigenschaft eines Körpers zu verstehen, bei welcher dieser entweder vollständig, d.h. in allen Bereichen flexibel ausgestaltet ist, oder bei welcher der Körper mindestens einen Abschnitt oder Bereich aufweist, welcher flexibel ist und mindestens einen weiteren Bereich oder Abschnitt, in welchem der Körper nicht flexibel ausgestaltet ist.

Weiterhin weist der Sekundärbehälter mindestens einen zwischen der Außenhülle und dem flexiblen Folienbeutel angeordneten Wärmetauscherraum zur Aufnahme mindestens eines fluiden Wärmetauschermediums auf. Unter einem Wärmetauscherraum ist dabei ein Zwischenraum zwischen der Außenhülle des Sekundärbehälters und dem Primärbehälter zu verstehen, durch welchen das Wärmetauschermedium strömen kann und/oder in welchem das Wärmetauschermedium strömungsfrei aufgenommen werden kann. Der Zwischenraum kann vollständig offen ausgestaltet sein oder kann auch einseitig oder beidseitig geschlossen ausgestaltet sein. Dieser Zwischenraum soll insbesondere einen unmittelbaren Kontakt zwischen dem Primärbehälter und der Außenhülle des Sekundärbehälters, ohne Kontakt mit dem fluiden Wärmetauschermedium, verhindern und vorzugsweise einen Mindestabstand gewährleisten.

Insbesondere kann, zur vollständigen oder teilweisen Verhinderung eines derartigen Kontakts zwischen dem Primärbehälter und der Außenhülle, weiterhin mindestens ein Abstandshalterelement in den Wärmetauscherraum eingebracht sein. Dieses Abstandshalterelement kann von dem fluiden Wärmetauschermedium durchströmbar ausgestaltet sein und kann eingerichtet sein, um einen Abstand zwischen der Außenhülle und dem Folienbeutel des Primärbehälters aufrechtzuerhalten.

Das Abstandshalterelement sollte ebenfalls vorzugsweise vollständig oder teilweise flexibel ausgestaltet sein. Weiterhin sollte das Abstandshalterelement eine möglichst gleichmäßige und vollständige Ausfüllung bzw. Durchströmung des Wärmetauscherraums mit dem fluiden Wärmetauschermedium ermöglichen. Es ist bevorzugt, wenn das Abstandshalterelement ganz oder teilweise aus einem Kunststoffmaterial hergestellt ist und eine Mehrzahl von dem fluiden Wärmetauschermedium durchströmbaren Kanälen und/oder Zwischenräumen aufweist. Alternativ oder zusätzlich zu einem Kunststoffmaterial sind jedoch grundsätzlich auch andere Materialien möglich, welche die oben genannten Eigenschaften erfüllen. Beispielsweise lassen sich Füllmaterialien einsetzen, zwischen welchen im eingefüllten Zustand Zwischenräume auftreten, durch welche das Wärmetauschermedium strömen kann. Alternativ oder zusätzlich lassen sich beispielsweise Wabenstrukturen einsetzen, bei welchen die Waben untereinander in Verbindung stehen, beispielsweise ebenfalls wiederum Wabenstrukturen aus Kunststoff. Verschiedene Ausgestaltungen sind möglich. Die Außenhülle des Sekundärbehälters kann dabei auf verschiedene Weisen ausgestaltet sein. Beispielsweise kann diese eine Metallfolie und/oder mindestens eine mit einem metallischen Werkstoff, insbesondere Aluminium, beschichtete Folie umfassen, beispielsweise eine Kunststofffolie und/oder Papierfolie. Auch eine Laminatfolie ist beispielsweise einsetzbar.

Der Kryobehälter kann dabei derart eingerichtet sein, dass der Primärbehälter unmittelbar in den Sekundärbehälter mit der Außenhülle und gegebenenfalls dem Abstandshalterelement eingebracht wird. Anschließend kann der Zwischenraum zwischen dem Primärbehälter, beispielsweise dem flexiblen Folienbeutel des Primärbehälters, und der Außenhülle mit dem mindestens einem Wärmetauschermedium gefüllt und/oder durchströmt werden, beispielsweise um einen unten näher beschriebenen Einfrier- oder Auftauvorgang zu gewährleisten. Beispielsweise kann der Wärmetauscherraum unmittelbar mit einem gasförmigen Wärmetauschermedium, wie beispielsweise einem flüssigen Gas, insbesondere Stickstoff, gefüllt werden.

Alternativ oder zusätzlich kann der Sekundärbehälter jedoch auch auf komplexere Weise ausgestaltet sein. So kann der Sekundärbehälter beispielsweise zusätzlich mindestens eine Innenhülle aufweisen, welche dem Primärbehälter zuweist und welche vorzugsweise zumindest teilweise flexibel ausgestaltet ist. Wiederum kann diese Innenhülle beispielsweise ganz oder teilweise aus einem Kunststoffmaterial hergestellt sein. Die Innenhülle ist, wie auch die Außenhülle, vorzugsweise im Wesentlichen mediendicht gegenüber dem fluiden Wärmetauschermedium ausgestaltet. Allgemein kann die Innenhülle mindestens ein Folienmaterial aufweisen, welches in beschichteter oder unbeschichteter Form vorliegen kann. Auch ein Laminataufbau ist möglich.

Der Kryobehälter kann weiterhin mindestens ein in dem Wärmetauscherraum aufgenommenes und/oder den Wärmetauscherraum durchströmendes fluides Wärmetauschermedium aufweisen. Insbesondere kann es sich dabei um eines oder mehrere der folgenden Wärmetauschermedien handeln: ein Silikonöl; ein Gas (also um ein bei Normalbedingungen gasförmiges Medium) in flüssigem und/oder gasförmigem Zustand, insbesondere ein Flüssiggas, insbesondere Stickstoff, besonders bevorzugt flüssigen Stickstoff. Insbesondere die Verwendung von flüssigem Stickstoff ist besonders kostengünstig und kann zu einem einfachen und kostengünstigen Einfrieren des Mediums genutzt werden. In Versuchen hat sich dabei gezeigt, dass kommerziell erhältliche Folienbeutel, wie beispielsweise die oben beschriebenen Bags, welche in der Regel auch als Einwegmaterialien erhältlich sind, den Temperaturen des flüssigen Stickstoffs standhalten.

Insbesondere unter Verwendung der oben dargestellten Innenhülle kann der Sekundärbehälter zumindest teilweise als flexibler und zumindest doppelwandiger Aufnahmebeutel ausgestaltet sein. Unter einem Aufnahmebeutel ist dabei ein Beutel zu verstehen, welcher einen Innenraum und mindestens eine Öffnung zum Einbringen des Primärbehälters in den Innenraum aufweist. Der Aufnahmebeutel kann dabei zwei oder mehr Wände aufweisen. Diese Wände umfassen die mindestens eine Außenhülle sowie mindestens eine dem Folienbeutel zuweisende und vorzugsweise zumindest teilweise flexibel ausgestaltete Innenhülle, beispielsweise gemäß der obigen Beschreibung. Weiterhin umfasst der doppelwandige Aufnahmebeutel mindestens einen zwischen der Außenhülle und der Innenhülle angeordneten Wärmetauscherraum, beispielsweise gemäß der obigen Beschreibung. In diesem Wärmetauscherraum kann wiederum optional das mindestens eine Abstandshalterelement gemäß der obigen Beschreibung eingebracht sein.

Die Außenhülle und die Innenhülle sollen dabei in zumindest einem Bereich miteinander verbunden sein, so dass der Wärmetauscherraum zumindest im Wesentlichen abgeschlossen ist. Unter im Wesentlichen abgeschlossen ist dabei eine zumindest weitgehend mediendichte Abschließung gegenüber dem Wärmetauschermedium zu verstehen, so dass dieses Wärmetauschermedium nicht ungewollt in den Innenraum des Aufnahmebeutels und/oder außerhalb des Aufnahmebeutels gelangen kann, zumindest nicht über übliche Lagerungszeiträume von 1 bis 2 Jahren. Kleinere Leckagen können dabei jedoch toleriert werden.

Der Aufnahmebeutel kann weiterhin mindestens eine Zufuhrvorrichtung für das Wärmetauschermedium aufweisen. Insbesondere kann der Aufnahmebeutel einen ersten Anschluss, insbesondere mindestens einen Anschlussstutzen, zum Zuführen des Wärmetauschermediums und vorzugsweise mindestens einen zweiten Anschluss, insbesondere einen Anschlussstutzen, zum Abführen des Wärmetauschermediums aufweisen. Der erste Anschluss und der zweite Anschluss sollen mit dem Wärmetauscherraum fluidisch in Verbindung stehen. Zwischen dem ersten Anschluss und dem zweiten Anschluss soll dabei in dem Wärmetauscherraum mindestens ein von dem Wärmetauschermedium durchströmbarer Kanal ausgebildet sein. Dieser Kanal kann dabei flach und breit ausgelegt sein und kann auch verzweigt oder mit mehreren Kanälen ausgestaltet sein. Vorzugsweise ist dieser Kanal derart ausgestaltet, dass der Kanal in dem Bereich, in welchem der Aufnahmebeutel den Primärbehälter umschließt, vollständig ausgebildet ist, so dass eine gleichmäßige Temperierung des Primärbeutels möglich ist.

Der Sekundärbehälter kann weiterhin mindestens ein einen Füllstand des Wärmetauschermediums in dem Wärmetauscherraum kontrollierendes und/oder regulierendes Element aufweisen. Beispielsweise kann dieses Element einen Sensor und/oder ein Ventil umfassen. Beispielsweise kann ein Schwimmerventil vorgesehen sein, welches einen Füllstand des Wärmetauschermediums in dem Wärmetauscherraum begrenzt bzw. auf ein bestimmtes Level einstellt.

Neben dem Primärbehälter und dem Sekundärbehälter kann der Kryobehälter weiterhin mindestens einen im Wesentlichen formstabilen Außenbehälter aufweisen. Unter "im Wesentlichen formstabil" ist dabei eine Eigenschaft zu verstehen, bei welcher unter üblichen, beim Transport auftretenden Belastungen, beispielsweise der eigenen Gewichtskraft und/oder der Gewichtskraft des Inhalts, keine wesentlichen Verformungen des Außenbehälters auftreten. Der Außenbehälter soll eingerichtet sein, um den mindestens einen Sekundärbehälter mit dem darin aufgenommenen mindestens einen Primärbehälter aufzunehmen und gegen mechanische Einwirkungen von außen abzuschirmen. Unter einer Abschirmung ist dabei eine Eigenschaft zu verstehen, bei welcher von außen einwirkende, beim Transport übliche Kräfte keine Beschädigungen des Sekundärbehälters und/oder des Primärbehälters bewirken können. Beispielsweise kann der Außenbehälter ganz oder teilweise aus einem steifen Material hergestellt sein.

Der Außenbehälter kann dabei einen oder mehrere Innenräume aufweisen, in welchen der oder die Sekundärbehälter eingesetzt werden können. Dabei kann ein einzelner Innenraum vorgesehen sein, in welchen ein oder mehrere Sekundärbehälter mit einem oder mehreren Primärbehältern aufgenommen werden. Alternativ können jedoch auch mehrere Innenräume vorgesehen sein, beispielsweise indem der Außenbehälter in entsprechende Fächer unterteilt ist. In diese können jeweils ein Sekundärbehälter oder mehrere Sekundärbehälter, jeweils mit einem oder mehreren Primärbehältern, aufgenommen werden.

Der Außenbehälter kann weiterhin thermisch isolierende Eigenschaften aufweisen. Unter thermisch isolierenden Eigenschaften ist dabei eine Verzögerung eines Wärmeangleichs an eine Umgebung zu verstehen, so dass beispielsweise auch bei Raumtemperatur ein gefrorener Zustand eines wässrigen Mediums im Inneren des Außenbehälters ohne aktive Kühlmaßnahmen für mehrere Minuten, vorzugsweise mehrere Stunden, aufrecht erhalten werden kann. Diese thermisch isolierenden Eigenschaften können beispielsweise durch die Verwendung eines oder mehrerer thermisch isolierenden Materialien herbeigeführt werden, beispielsweise geschäumter Materialien und/oder Papier- bzw. Kartonmaterialien.

So kann der Außenbehälter beispielsweise ganz oder teilweise aus einem Papiermaterial hergestellt sein, insbesondere umfassend eine Wellpappe. Auch andere Materialien sind jedoch grundsätzlich verwendbar. Vorzugsweise sind die Materialien des Außenbehälters ganz oder teilweise derart eingerichtet, dass diese leicht entsorgt werden können, so dass der Kryobehälter vorzugsweise als Ganzes als Einweg-Kryobehälter ausgestaltet sein kann, gegebenenfalls mit wenigen Ausnahmen an Elementen, welche wiederholt eingesetzt werden können. Insbesondere ein Papiermaterial ist leicht zu entsorgen und daher umweltfreundlich.

Der Außenbehälter kann beispielsweise im Wesentlichen eine Quaderform aufweisen. Unter einer im Wesentlichen quaderförmigen Form ist dabei eine Form zu verstehen, welche auch leicht von einer perfekten Quaderform abweichen kann. So können beispielsweise am Außenbehälter ein oder mehrere Stützelemente vorgesehen sein, um eine Standfestigkeit des Außenbehälters zu erhöhen. Alternativ oder zusätzlich können auch Verbindungselemente vorgesehen sein, um mehrere Außenbehälter stabil miteinander zu verbinden, beispielsweise zu verharken und/oder um mehrere Außenbehälter bequem auf einer Palette unterbringen zu können.

Der Außenbehälter kann weiterhin im Wesentlichen geschlossen ausgestaltet sein. Zu diesem Zweck kann der Außenbehälter beispielsweise einen Körper mit einer entsprechenden Aufnahme und mehrere Deckel aufweisen. Auch eine andere Ausgestaltung ist möglich. Weiterhin kann der Kryobehälter mindestens eine Durchführung zum Einbringen und/oder Ausbringen des mindestens einen Wärmetauschermediums und/oder des Mediums selbst aufweisen. Diese Durchführungen können beispielsweise einfache Öffnungen umfassen. Alternativ oder zusätzlich sind auch komplexere Durchführungen möglich. Beispielsweise Schlauchdurchführungen, gegebenenfalls mit mindestens einem entsprechenden Anschluss. Verschiedene Ausgestaltungen sind denkbar.

Neben dem Kryobehälter wird weiterhin ein Sekundärbehälter zur Verwendung in einem Kryobehälter gemäß einer oder mehreren der oben beschriebenen Ausführungsformen vorgeschlagen. Bezüglich der möglichen Gestaltungen des Sekundärbehälters kann weitgehend auf die obige Beschreibung verwiesen werden. So ist der Sekundärbehälter vorzugsweise zumindest teilweise flexibel ausgestaltet und weist mindestens eine Öffnung zum Einführen des Primärbehälters auf. Weiterhin weist der Sekundärbehälter mindestens eine vorzugsweise zumindest teilweise flexibel ausgestaltete Außenhülle auf sowie mindestens einen zwischen der Außenhülle und dem flexiblen Primärbehälter, insbesondere dem flexiblen Folienbeutel des Primärbehälters, angeordneten Wärmetauscherraum zur Aufnahme mindestens eines fluiden Wärmetauschermediums. Für weitere Ausgestaltungen kann auf die obige Beschreibung verwiesen werden.

Die Erfindung schlägt weiterhin eine Präparationsvorrichtung zum Einlagern eines Mediums, insbesondere eines biochemischen und/oder medizinischen Produkts, vor. Bezüglich der Beschreibung dieses Mediums kann weitgehend auf die obige Beschreibung verwiesen werden. Unter einer Präparationsvorrichtung zum Einlagern des Mediums ist dabei eine Vorrichtung zu verstehen, welche eine Vorbereitung des Mediums für ein Einlagern, eine Wiederinbetriebnahme des Mediums nach dem Einlagern, eine Vorbereitung für einen Transport oder eine Wiederinbetriebnahme des Mediums nach dem Transport gewährleistet. Beispielsweise kann diese Präparationsvorrichtung zum Einfrieren und/oder Auftauen des Mediums geeignet sein.

Die Präparationsvorrichtung umfasst mindestens einen Kryobehälter gemäß einer oder mehreren der oben beschriebenen Ausführungsformen. Weiterhin umfasst die Präparationsvorrichtung mindestens eine an den Kryobehälter reversibel ankoppelbare Bereitstellungsvorrichtung zum Bereitstellen eines Wärmetauschermediums an den Kryobehälter. Beispielsweise kann die Bereitstellungsvorrichtung eine Vorrichtung zum Kühlen und/oder Erwärmen des Wärmetauschermediums umfassen. Weiterhin kann die Bereitstellungsvorrichtung, alternativ oder zusätzlich, mindestens eine Pumpe umfassen, um das Wärmetauschermedium in den Sekundärbehälter einzubringen und/oder durch den Sekundärbehälter zu pumpen. Unter einer reversiblen Ankopplung soll dabei zu verstehen sein, dass, beispielsweise über eine Schlauchverbindung und/oder eine ähnliche lösbare Verbindung, vorübergehend Wärmetauschermedium an den Kryobehälter bereitgestellt werden kann und/oder durch diesen hindurch gepumpt werden kann. Für einen Transport des Kryobehälters und/oder eine Einlagerung des Kryobehälters kann die Präparationsvorrichtung dann ganz oder teilweise von dem Kryobehälter abgekoppelt werden, wobei beispielsweise ein Teil des Wärmetauschermediums in dem Sekundärbehälter verbleibt.

Neben den oben beschriebenen Vorrichtungen in einer oder mehreren der oben beschriebenen Auswirkungsformen wird weiterhin ein Verfahren zum Lagern und/oder Transportieren eines Mediums, insbesondere eines biochemischen und/oder medizinischen Produkts vorgeschlagen, welches insbesondere unter Verwendung eines Kryobehälters nach einem der vorhergehenden, einen Kryobehälter betreffenden Ansprüche arbeiten kann. Weiterhin können ein Sekundärbehälter und/oder eine Präparationsvorrichtung gemäß einer oder mehreren der oben beschriebenen Ausführungsformen verwendet werden, so dass ebenfalls weitgehend auf die obige Beschreibung verwiesen werden kann.

Das Verfahren umfasst die im Folgenden beschriebenen Verfahrensschritte. Diese Verfahrensschritte können in der dargestellten Reihenfolge durchgeführt werden, was jedoch nicht zwingend erforderlich ist. Beispielsweise können der im Folgenden beschriebene erste Verfahrensschritt und der im Folgenden beschriebene zweite Verfahrensschritt in umgekehrter Reihenfolge durchgeführt werden. Weiterhin können weitere, nicht dargestellte Verfahrensschritte durchgeführt werden. Zudem können Verfahrensschritte in einer anderen Reihenfolge durchgeführt werden, oder es können einzelne oder mehrere Verfahrensschritte wiederholt, zeitlich überlappend oder gleichzeitig durchgeführt werden.

In einem ersten Verfahrensschritt wird ein Primärbehälter in einen Sekundärbehälter eingebracht, wobei der Primärbehälter mindestens einen flexiblen Folienbeutel aufweist, wobei der Sekundärbehälter vorzugsweise zumindest teilweise flexibel ausgestaltet ist und mindestens eine Öffnung zum Einführen des Primärbehälters aufweist. Der Sekundärbehälter weist weiterhin mindestens eine vorzugsweise zumindest teilweise flexibel ausgestaltete Außenhülle auf sowie mindestens einen zwischen der Außenhülle und dem flexiblen Folienbeutel des Primärbehälters angeordneten Wärmetauscherraum zur Aufnahme minbestens eines fluiden Wärmetauschermediums. In einem zweiten Verfahrensschritt wird das Medium in den Primärbehälter eingebracht, beispielsweise durch einfaches Einfüllen, Einpumpen, Eingießen oder andere, dem Fachmann bekannte und vorzugsweise den Eigenschaften des Mediums angepasste Verfahren. Es sei darauf hingewiesen, dass das Einbringen des Primärbehälters in den Sekundärbehälter vor oder nach dem Befüllen des Primärbehälters mit dem Medium erfolgen kann. Aufgrund eines geringeren Handhabungsrisikos ist allgemein ein Verfahren bevorzugt, bei welchem der Primärbehälter mit dem Medium befüllt wird, wenn sich dieser Primärbehälter bereits im Sekundärbehälter befindet.

In einem dritten Verfahrensschritt wird mindestens ein Wärmetauschermedium in oder durch den Wärmetauscherraum geleitet. Dieses Einbringen des Wärmetauschermediums in den Wärmetauscherraum kann dabei in Form eines einmaligen Befüllens erfolgen. Alternativ kann, wie oben anlässlich der möglichen Ausgestaltungen des Sekundärbehälters dargestellt, auch ein Hindurchleiten des Wärmetauschermediums durch den Wärmetauscherraum erfolgen, beispielsweise in Form eines Umpumpens.

Das Verfahren kann auf verschiedene Weisen vorteilhaft weitergebildet werden. So kann in einem weiteren Verfahrensschritt beispielsweise der Sekundärbehälter in einen im Wesentlichen formstabilen Außenbehälter eingebracht werden, wobei wiederum auf die obige Beschreibung verwiesen werden kann. Der Außenbehälter ist eingerichtet, um den mindestens einen Sekundärbehälter mit dem darin aufgenommenen mindestens einen Primärbehälter aufzunehmen und gegen mechanische Einwirkungen von außen abzuschirmen. Wiederum kann dabei das Einbringen des Sekundärbehälters in den Außenbehälter zu einem Zeitpunkt erfolgen, währenddessen der Primärbehälter bereits in dem Sekundärbehälter enthalten ist. Alternativ kann jedoch auch erst der unbefüllte Sekundärbehälter in den Außenbehälter eingebracht werden, wonach der Primärbehälter in den Außenbehälter eingebracht wird.

In einem weiteren Verfahrensschritt kann das Medium eingefroren und anschließend eingelagert und/oder transportiert werden. Zum Einfrieren kann dabei ein Wärmetauschermedium mit einer Temperatur unterhalb eines Gefrierpunkts des Mediums verwendet werden, beispielsweise wie oben dargestellt, Silikonöl und/oder ein Flüssiggas, beispielsweise flüssiger Stickstoff. Das Wärmetauschermedium kann, wie oben dargestellt, einmalig eingebracht werden und/oder durch den Kryobehälter hindurchgepumpt werden. Auch Kombinationen sind möglich, beispielsweise indem zunächst Wärmetauschermedium einmalig eingebracht wird, das heißt vorgelegt wird, und dieses dann bei Bedarf nachgefüllt wird, beispielsweise ergänzt wird. Es kann ein Kühlkreislauf vorgesehen sein, wobei in einem Bereich das Wärmetauschermedium den Primärbehälter mit dem darin aufgenommenen Medium herunterkühlt, und wobei in einem anderen Bereich das Wärmetauschermedium die beim Herunterkühlen aufgenommene Wärme an ein weiteres Medium und/oder eine weitere Vorrichtung abgibt. Es sei diesbezüglich darauf hingewiesen, dass der Begriff des Wärmetauschermediums im Rahmen der vorliegenden Erfindung breit zu fassen ist und jegliches fluides Medium umfasst, welches in der Lage ist, Wärme aufzunehmen und auf diese Weise das einzulagernde bzw. zu transportierende Medium herunterzukühlen. Das Wärmetauschermedium kann beispielsweise Teil eines fluiden Mediums einer Wärmepumpe sein oder kann auf andere Weise zum Herunterkühlen des einzulagernden bzw. transportierenden Mediums eingesetzt werden.

Um das Medium nach einem Einlagern und/oder nach einem Transport wieder aufzutauen, kann das Verfahren weiterhin ein Einbringen eines gasförmigen und/oder flüssigen Wärmetauschermediums mit einer Temperatur oberhalb eines Gefrierpunkts des Mediums beinhalten. Dieses Wärmetauschermedium, welches hier als Auftaumedium wirkt, kann beispielsweise wiederum einmalig eingebracht werden, oder, was bevorzugt ist, durch den Sekundärbehälter gepumpt werden. Das Wärmetauschermedium kann in diesem Fall auch beispielsweise erwärmte Luft sein, welche in den Außenbehälter eingeblasen wird, beispielsweise mit Hilfe eines Gebläses. Auch andere erwärmte Gase und/oder erwärmte Flüssigkeiten sind einsetzbar.

Das Verfahren kann weiterhin mindestens einen Verfahrensschritt umfassen, in welchem der Primärbehälter und/oder der Sekundärbehälter sowie gegebenenfalls der optionale Außenbehälter nach einem Entnehmen des Mediums ganz oder teilweise entsorgt wird. Beispielsweise kann dieses Entsorgen durch ein vollständiges oder teilweises Recycling und/oder ein Verbrennen erfolgen.

Die vorgeschlagenen Vorrichtungen und das vorgeschlagene Verfahren in einer oder mehreren der oben beschriebenen Ausführungsformen weisen gegenüber bekannten Vorrichtungen und Verfahren zahlreiche Vorteile auf. So kann ein Einfrieren und/oder Auftauen des Mediums in einem Wärmetauscher folgen, der nach dem Prozess auch komplett entsorgt werden kann. Eine Reinigung und/oder Sterilisationen sind in der Regel nicht erforderlich, können jedoch gegebenenfalls zusätzlich durchgeführt werden.

Im Gegensatz zu Edelstahl-Kryobehältern, welche eine erhebliche Investition und erheblichen logistischen Aufwand erfordern, erfordern die vorgeschlagenen Kryobehälter und das vorgeschlagene Verfahren vergleichsweise niedrige Investitionskosten und/oder Verbrauchskosten, da eine einmalige Verwendung beziehungsweise Anwendung erfolgen kann. Weiterhin haben die vorgeschlagenen Kryobehälter und/oder das vorgeschlagene Verfahren in der Regel keine Kapitalbindung zur Folge. Auch Anpassungen an geänderte Volumina und/oder Prozess Vorgaben sind leichter realisierbar. Als Wärmeträger können kostengünstige Wärmeaustauschermedien verwendet werden, wie beispielsweise Stickstoff, insbesondere flüssiger Stickstoff. Die Kryobehälter lassen sich kompakt herstellen, so dass eine vergleichsweise geringe Tiefkühlfläche erforderlich ist, im Gegensatz beispielsweise zu bekannten Edelstahl-Kryobehältern. Auch die Transportkosten lassen sich erheblich senken. Dies ist dadurch bedingt, dass zum einen die vorgeschlagenen Kryobehälter erheblich leichter ausgestaltet werden können als herkömmliche Kryobehälter. Zudem sind die Kryobehälter derart kostengünstig und können als Einweg-Kryobehälter ausgestaltet werden, dass ein Rücktransport der leeren Kryobehälter in der Regel nicht erforderlich ist. Die leeren Kryobehälter können an Ort und Stelle entsorgt werden.

Weiterhin lassen sich die vorgeschlagenen Kryobehälter auch kleinvolumig im leeren Zustand einlagern. Insbesondere die Verwendung von Papiermaterialien erlaubt auch eine gefaltete Einlagerung, so dass sich die Lagerhaltungskosten im Vergleich zu üblichen Edelstahlbehältern erheblich senken lassen. Insbesondere kann auch flexibel auf geänderte Kapazitätsanforderungen reagiert werden.

Weiterhin lässt sich aufgrund der möglichen Vermeidung schwierig zu handhabender Wärmetauschermedien wie beispielsweise Silikonöl, ein Risiko einer Verschmutzung weitgehend minimieren. Insbesondere die Verwendung von flüssigem Stickstoff bietet die Möglichkeit einer hohen Prozesssicherheit, bei gleichzeitiger erheblicher Senkung von Kosten. Die einmalige Einfüllung eines Wärmetauschermediums, beispielsweise einer genau bemessenen Menge eines Wärmetauschermediums für einen Einfriervorgang, lässt sich insbesondere mit Stickstoff als Wärmeträger leicht bewerkstelligen, da Stichstoff kostengünstig und weit verfügbar ist.

Durch die Verwendung von Einweg-Kryobehältern und/oder Kryobehältern, welche zumindest teilweise als Einweg-Kryobehälter ausgestaltet sind, lassen sich zudem die bei Edelstahl-Kryobehältern entstehenden Reinigungskosten und/oder Anlageinvestitionen vermeiden. Eine Entsorgung der Kryobehälter ist zudem in vielen Fällen umweltverträglicher als eine aufwändige Reinigung, beispielsweise mit Reinigungsmitteln und/oder Desinfektionsmitteln. Zudem kann ein hohes Maß an Sterilitätsschutz gewährleistet werden und es lässt sich eine Gefahr durch Querkontaminationen vermeiden. Durch die Möglichkeit, durch Entsorgung der Kryobehälter auf einen Rücktransport dieser Kryobehälter zu verzichten, da diese kostengünstig und leicht entsorgbar ausgestaltet sein können, kann die Umweltverträglichkeit des gesamten Prozesses weiter gesteigert werden.

Gegenüber bekannten Einweg-Kryobehältern, wie beispielsweise den in EP 1 441 585 B1 und US 7,104,074 B2 beschriebenen Behältnissen, bietet die vorgeschlagene Konstruktion den Vorteil, dass der Sekundärbehälter vorgesehen ist, in welchem das Wärmetauschermedium enthalten sein kann und welcher den Primärbehälter zudem vor mechanischen Beschädigungen schützen kann. Zur weiteren Bereitstellung eines mechanischen Schutzes kann der oben beschriebene mindestens eine Außenbehälter vorgesehen sein, der den Primärbehälter und/oder auch den Sekundärbehälter vor mechanischen Belastungen schützen kann. Der Sekundärbehälter kann gleichzeitig als mitgeführte und dennoch entsorgbarer Wärmetauscher wirken, so dass der Kryobehälter auch für einen zumindest kurzfristigen Transport außerhalb eines Tiefkühlraumes und/oder eines Tiefkühlcontainers geeignet ist. Gleichzeitig ist dieser mitgeführte Wärmetauscher jedoch platzsparend und kostengünstig ausführbar, so dass dieser auch leicht entsorgt werden kann und dass auf einen Rücktransport desselben verzichtet werden kann.

### Kurze Beschreibung der Zeichnungen

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigt:
- Figur 1A: eine Schnittdarstellung eines ersten Ausführungsbeispiels eines erfindungsgemäßen Kryobehälters;
- Figur 1B: eine perspektivische Darstellung des Kryobehälters gemäß Figur 1A in Draufsicht schräg von oben,
- Figur 1C: eine Draufsicht auf den Kryobehälter gemäß Figur 1A; und
- Figur 2: eine zu Figur 1A analoge Darstellung eines zweiten Ausführungsbeispiels eines erfindungsgemäßen Kryobehälters.

### Ausführungsbeispiele

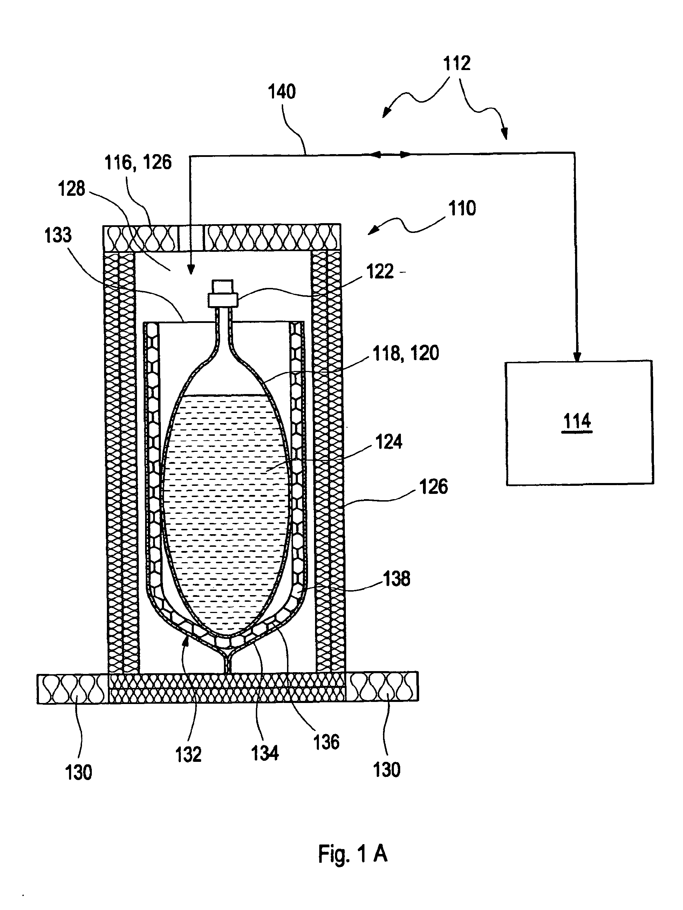

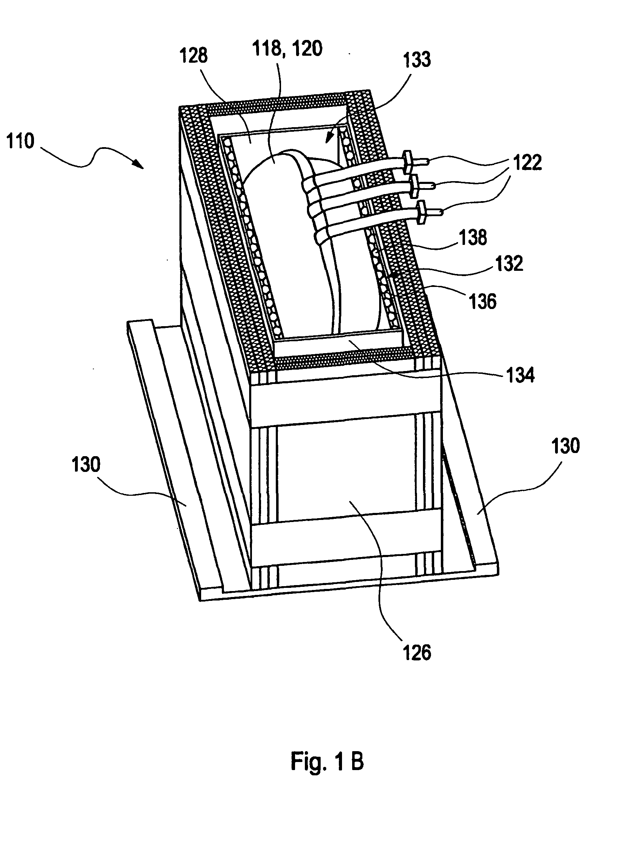

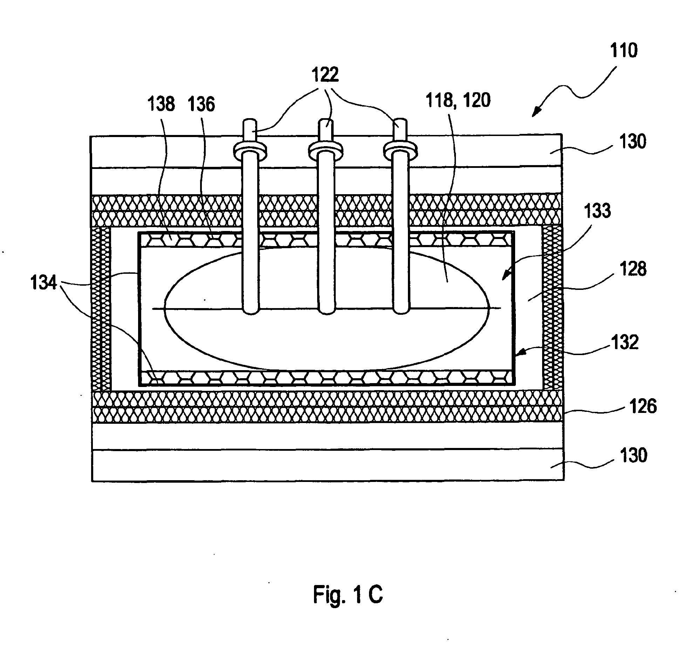

In den Figuren 1A bis 1C ist ein erstes Ausführungsbeispiel eines erfindungsgemäßen Kryobehälters 110 dargestellt. Gleichzeitig zeigt Figur 1A ein Ausführungsbeispiel einer erfindungsgemäßen Präparationsvorrichtung 112, welche neben dem Kryobehälter weiterhin eine an den Kryobehälter 110 reversibel ankoppelbare Bereitstellungsvorrichtung 114 umfasst. In den Figuren 1B und 1C ist allein der Kryobehälter 110, welcher in Figur 1A in Schnittdarstellung von der Seite mit einem Deckel 116 gezeigt ist, in perspektivischen Darstellungen schräg von oben (Figur 1 B) und von oben (Figur 1C) ohne Deckel 116 gezeigt.

Der Kryobehälter 110 umfasst einen Primärbehälter 118 in Form eines flexiblen Folienbeutels 120 mit Schlauchanschlüssen 122. Beispielsweise kann dieser flexible Folienbeutel 120 als sterilisierter Disposable Bag ausgestaltet sein, beispielsweise als so genannter "Standard Flexboy^{®} bioprocessing bag" der Firma Sartorius Stedim Biotech. Auch andere Ausgestaltungen sind jedoch grundsätzlich möglich. Der Primärbehälter 118 kann über die Schlauchanschlüsse 122, welche als sterile Verbindungen ausgestaltet sein können, mit einem Medium, beispielsweise einem Medikament, einem Diagnostikum oder einem biotechnischen Wirkstoff, gefüllt sein. Das Medium ist in den Figuren allgemein mit der Bezugsziffer 124 bezeichnet.

Weiterhin umfasst der Kryobehälter 110 einen Außenbehälter 126, welcher in diesem Ausführungsbeispiel aus einem Grundgerüst aus einem einfachen Trägermaterial, beispielsweise mehrlagiger Wellpappe, hergestellt sein kann. Dieses Grundgerüst dient gleichzeitig als Stabilisierung und Isolierung. Der Außenbehälter 126 kann, wie in den Figuren 1A bis 1C dargestellt, beispielsweise im Wesentlichen quaderförmig ausgestaltet sein, mit einem Innenraum 128 sowie optional einer oder mehreren Stützvorrichtungen 130 zur Erhöhung der Standfestigkeit.

In dieses Gerüst des Außenbehälters 126 ist in dem in den Figuren 1A bis 1C dargestellten Ausführungsbeispiel ein Sekundärbehälter 132 eingebracht. Dieser Sekundärbehälter 132 ist in dem dargestellten Ausführungsbeispiel an seinem oberen Ende offen ausgestaltet und weist eine Öffnung 133 auf, über welche der flexible Folienbeutel 120 des Primärbehälters 118 in den Sekundärbehälter 132 eingebracht werden kann. Der Sekundärbehälter 132 weist in dem Ausführungsbeispiel eine Außenhülle 134 auf, welche flexibel ausgestaltet ist. Beispielsweise kann es sich bei dieser Außenhülle 134 um einen nach oben geöffneten Beutel aus Aluminiumfolie und/oder einer metallkaschierten, beispielsweise aluminiumkaschierten Kunststoffolie handeln. In diese Außenhülle 134 ist ein Abstandshalterelement 136 aufgebracht, welches gleichzeitig der Versteifung und der Bildung eines Wärmetauscherraums 138 zwischen der Außenhülle 134 und dem flexiblen Folienbeutel 120 des Primärbehälters 118 dient. Beispielsweise kann dieses Abstandshalterelement 136 aus Kunststoff hergestellt sein. Dieses kann eine Trennschicht zwischen der Isolierung, insbesondere dem Sekundärbehälter 132 bzw. der Außenhülle 134, und dem Medium 124 gewährleisten. Wie insbesondere aus Figur 1C hervor geht, ist dieses Abstandshalterelement 136 dabei in dem dargestellten Ausführungsbeispiel lediglich auf den Breitseiten des flexiblen Folienbeutels 120 angeordnet, nicht hingegen an den Schmalseiten. An diesen Schmalseiten erfolgt ohnehin kein oder lediglich ein geringfügiger Kontakt zwischen der Außenhülle 134 und dem Primärbehälter 118.

Das Abstandshalterelement 136 ist eingerichtet, dass dieses ein Wärmetauschermedium aufnehmen oder von diesem durchströmt werden kann. So kann beispielsweise nach dem Befüllen des Primärbehälters 118 mit dem Medium 124 beispielsweise flüssiger Stickstoff (LN₂) in den als Wärmetauscherraum 138 dienenden Zwischenraum zwischen der Außenhülle 134 und dem flexiblen Folienbeutel 120 gegeben werden. Dieser verdampft spontan und kühlt so das Medium 124 ab. Über die Menge an flüssigem Stickstoff kann der Prozess gesteuert werden. Beispielsweise kann der flüssige Stickstoff, wie in Figur 1A dargestellt, von einer Bereitstellungsvorrichtung 114 über ein Rohrleitungssystem 140 bereitgestellt werden, welches in den übrigen Figuren nicht dargestellt ist und welches an den Kryobehälter 110 ankoppelbar und von diesem abkoppelbar ist. Nachdem der Einfrierprozess des Mediums 124, beispielsweise bei -25 °C, abgeschlossen ist, kann das gesamte Disposable-System des Kryobehälters 110 beispielsweise in einem Tieflcühlraum gelagert werde.

Nach Beendigung des Einlagerns wird zum Auftauen und somit zur erneuten Nutzbarmachung des Mediums 124 beispielsweise vorgewärmte Luft in den Wärmetauscherraum 138 geblasen. Auch dies kann beispielsweise wiederum mittels der Bereitstellungsvorrichtung 114 erfolgen oder mit einer ähnlichen Bereitstellungsvorrichtung. Alternativ oder zusätzlich zu einem aktiven Auftauen, beispielsweise in der beschriebenen Weise, kann auch ein passiver Auftauvorgang eingesetzt werden. So kann beispielsweise bereits die umgebende Luft bei Raumtemperatur ausreichen, um ein Auftauen ohne Zusatzvorrichtungen und/oder ohne aktives Einblasen vorgewärmter Luft in den Wärmetauscherraum 138 zu ermöglichen.

Prozessbedingt können mit dem dargestellten System sehr schnelle Einfrierzeiten realisierbar sein. Dies ist insbesondere von Vorteil bei biologischen oder biochemischen Medien 124, bei welchen beispielsweise ein langsamer Einfrier- und Auftauprozess zu einer Phasentrennung oder sonstigen Inhomogenitäten führen könnte.

Nach der Anwendung kann der kostengünstige Kryobehälter ganz oder teilweise ohne spezielle Reinigung entsorgt werden. Ein Behältertourismus, wie er bei üblichen Kryobehältern aus Edelstahl in der Regel erforderlich ist, kann damit vorzugsweise entfallen.

Als flexibler Folienbeutel 120 können beispielsweise kommerziell erhältliche Disposables verwendet werden. Hierbei sind beispielsweise Beutel-Volumina bis zu 50 Litern oder sogar 80 Litern oder mehr denkbar. Weiterhin sind auch Mehrfach-Sets, also Kryobehälter 110 mit mehreren Primärbehältern 118, beispielsweise in einem oder mehreren Innenräumen 128, möglich. Beispielsweise können mehrere Fächer vorgesehen sein. Beispielsweise können ein, zwei, drei, vier oder fünf flexible Folienbeutel 120 in einem Kryobehälter 110 aufgenommen sein. Beispielsweise können mehrere Kryobehälter 110 auf einer Palette, beispielsweise einer Euro-Palette gelagert werden. Insbesondere können beispielsweise bis zu 300 Liter auf einer Palette gelagert werden, bei halbiertem Gewicht und Volumen im Vergleich zu herkömmlichen Kryogefäßen, insbesondere aus Edelstahl.

In ersten Versuchen hat sich der vorgeschlagene Kryobehälter als brauchbar für den praktischen Einsatz erwiesen. So wurden beispielsweise Einfrierzeiten für einen Liter Wasser von ca. einer halben Stunde verzeichnet. Pro Kilogramm Flüssigkeit wurde zwischen 1,5 und 2 Litern flüssiger Stickstoff benötigt. Beispielsweise kann eine vorgegebene Menge an flüssigem Stickstoff, welche für einen Einfriervorgang gerade ausreicht, in den Wärmetauscherraum 138 eingegeben werden.

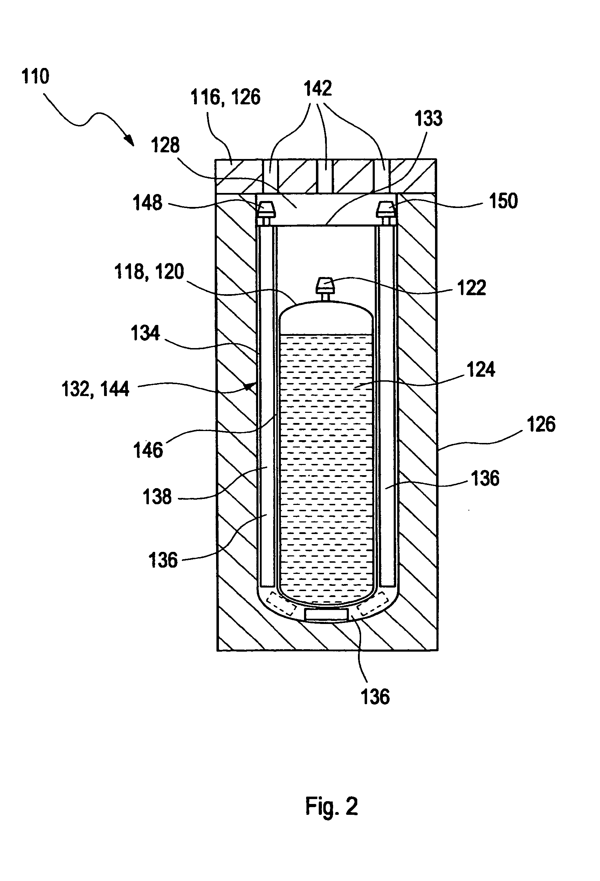

In Figur 2 ist, in analoger Darstellung zur Figur 1, jedoch ohne die Bereitstellungsvorrichtung 114 und das Rohrleitungssystem 140, eine zweite Ausführungsform eines erfindungsgemäßen Kryobehälters 110 dargestellt. Wiederum umfasst dieser Kryobehälter 110 einen Primärbehälter 118 mit einem flexiblen Folienbeutel 120 und Schlauchanschlüssen 122. Bezüglich dieses Primärbehälters 118 kann beispielsweise auf die obige Beschreibung der Figuren 1A bis 1C verwiesen werden.

Weiterhin umfasst der Kryobehälter 110 wiederum einen Außenbehälter 126, welcher auch einen Deckel 116 aufweist. Dieser Deckel 116 ist in diesem Fall mit mehreren Durchführungen 142 ausgestattet, so dass ein Einbringen und/oder Ausbringen des Wärmetauschermediums und/oder des zu lagernden bzw. zu transportierenden Mediums 124 auch bei geschlossenem Außenbehälter 126 erfolgen kann. Bezüglich der möglichen Ausgestaltungen des Außenbehälters 126 kann beispielsweise auf die obige Beschreibung der Figuren 1A bis 1C verwiesen werden.

Wiederum weist der Kryobehälter 110 auch einen Sekundärbehälter 132 auf, welcher über einen Wärmetauscherraum 138 verfügt. Im Unterschied zum Ausführungsbeispiel gemäß den Figuren 1A bis 1C weist das Wärmetauschermedium bei dem Ausführungsbeispiel gemäß Figur 2 jedoch vorzugsweise keinen direkten Kontakt zu dem flexiblen Folienbeutel 120, welcher beispielsweise als Kunststoff-Beutel ausgestaltet sein kann, auf. Zu diesem Zweck ist der Sekundärbehälter 132 in dem dargestellten Ausführungsbeispiel mit einem doppelwandigen Aufnahmebeutel 144 ausgestaltet. So weist der Sekundärbehälter 132 neben der Außenhülle 134 zusätzlich eine dem flexiblen Folienbeutel 120 zuweisende flexible Innenhülle 146 auf. An den Rändern können die Außenhülle 134 und die Innenhülle 146 miteinander verschweißt sein, so dass sich zwischen der Außenhülle 134 und der Innenhülle 146 ein Wärmetauscherraum 138 in Form eines langen, schmalen und breiten Kanals bildet, welcher an einem ersten Anschluss 148 beginnt und an einem zweiten Anschluss 150 endet. Der erste Anschluss 148 kann dementsprechend als Zulauf für ein Wärmetauschermedium dienen, und der zweite Anschluss 150 als Ablauf für dieses Wärmetauschermedium. In dem Zwischenraum zwischen der Innenhülle 146 und der Außenhülle 134, also in dem Wärmetauscherraum 138, welcher wiederum auch mit einem, beispielsweise steifen, Abstandshalterelement 136 gefüllt sein kann, kann das Wärmetauschermedium vom ersten Anschluss 148 zum zweiten Anschluss 150 strömen. Das Abstandshalterelement 136 kann zusätzlich, ganz oder teilweise, als Strömungsrichter wirken, um eine gleichmäßige Durchströmung zu bewirken, vorzugsweise entlang der gesamten Fläche des Wärmetauscherraums 138.

Das Wärmetauschermedium kann von dem ersten Anschluss 148 zu dem zweiten Anschluss 150 durch den Wärmetauscherraum 138 gepumpt werden, beispielsweise mittels einer entsprechenden Bereitstellungsvorrichtung 114, gemäß Figur 1A. Als Wärmetauschermedium, also als Wärmeträger, kann beispielsweise in diesem Fall Silikonöl verwendet werden.

### Bezugszeichenliste

- 110: Kryobehälter
- 112: Präparationsvorrichtung
- 114: Bereitstellungsvorrichtung
- 116: Deckel
- 118: Primärbehälter
- 120: flexibler Folienbeutel
- 122: Schlauchanschlüsse
- 124: Medium
- 126: Außenbehälter
- 128: Innenraum
- 130: Stützvorrichtungen
- 132: Sekundärbehälter
- 133: Öffnung
- 134: Außenhülle
- 136: Abstandshalterelement
- 138: Wärmetauscherraum
- 140: Rohrleitungssystem
- 142: Durchführungen
- 144: doppelwandiger Aufnahmebeutel
- 146: Innenhülle
- 148: erster Anschluss
- 150: zweiter Anschluss

## Patentansprüche

1. Kryobehälter (110) zum Lagern und/oder Transportieren eines Mediums (124), insbesondere eines biochemischen und/oder medizinischen Produkts, umfassend mindestens einen Primärbehälter (118), wobei der Primärbehälter (118) mindestens einen flexiblen Folienbeutel (120) aufweist, wobei der flexible Folienbeutel (120) zur Aufnahme des Mediums (124) eingerichtet ist, weiterhin umfassend mindestens einen den Primärbehälter (118) zumindest teilweise umschließenden Sekundärbehälter (132), wobei der Sekundärbehälter (132) vorzugsweise zumindest teilweise flexibel ausgestaltet ist, wobei der Sekundärbehälter (132) mindestens eine Öffnung (133) zum Einführen des Primärbehälters (118) aufweist, wobei der Sekundärbehälter (132) mindestens eine vorzugsweise zumindest teilweise flexibel ausgestaltete Außenhülle (134) aufweist, wobei der Sekundärbehälter (132) weiterhin mindestens einen zwischen der Außenhülle (134) und dem flexiblen Folienbeutel (120) angeordneten Wärmetauscherraum (138) zur Aufnahme mindestens eines fluiden Wärmetauschermediums aufweist.

2. Kryobehälter (110) nach dem vorhergehenden Anspruch, wobei der Primärbehälter (118) als Einweg-Folienbeutel (120) ausgestaltet ist.

3. Kryobehälter (110) nach einem der vorhergehenden Ansprüche, wobei der Wärmetauscherraum (138) mindestens ein in dem Wärmetauscherraum (138) angeordnetes Abstandshalterelement (136) aufweist, wobei das Abstandshalterelement (136) von dem fluiden Wärmetauschermedium durchströmbar ausgestaltet ist und wobei das Abstandshalterelement (136) weiterhin eingerichtet ist, um einen Abstand zwischen der Außenhülle (134) und dem Folienbeutel (120) aufrechtzuerhalten.

4. Kryobehälter (110) nach einem der vorhergehenden Ansprüche, wobei die Außenhülle (134) des Sekundärbehälters (132) mindestens eine Metallfolie und/oder mindestens eine mit einem metallischen Werkstoff, insbesondere Aluminium, beschichtete Kunststofffolie und/oder Papierfolie umfasst.

5. Kryobehälter (110) nach einem der vorhergehenden Ansprüche, wobei der Sekundärbehälter (132) weiterhin mindestens eine Innenhülle (146) aufweist, wobei die Innenhülle (146) dem Primärbehälter (118) zuweist und vorzugsweise zumindest teilweise flexibel ausgestaltet ist.

6. Kryobehälter (110) nach einem der vorhergehenden Ansprüche, wobei der Sekundärbehälter (132) als vorzugsweise zumindest teilweise flexibler und mindestens doppelwandiger Aufnahmebeutel (144) ausgestaltet ist, umfassend die mindestens eine Außenhülle (134), weiterhin umfassend mindestens eine dem Folienbeutel (120) zuweisende und vorzugsweise zumindest teilweise flexibel ausgestaltete Innenhülle (146), weiterhin umfassend den zwischen der Außenhülle (134) und der Innenhülle (146) angeordneten Wärmetauscherraum (138), wobei die Außenhülle (134) und die Innenhülle (146) in zumindest einem Bereich miteinander verbunden sind, derart, dass der Wärmetauscherraum (138) im Wesentlichen abgeschlossen ist.

7. Kryobehälter (110) nach dem vorhergehenden Anspruch, wobei der Aufnahmebeutel (144) weiterhin mindestens einen ersten Anschluss (148), insbesondere einen Anschlussstutzen, zum Zuführen des Wärmetauschermediums und mindestens einen zweiten Anschluss (150), insbesondere einen Anschlussstutzen, zum Abführen des Wärmetauschermediums aufweist, wobei der erste Anschluss (148) und der zweite Anschluss (150) mit dem Wärmetauscherraum (138) fluidisch in Verbindung stehen, wobei zwischen dem ersten Anschluss (148) und dem zweiten Anschluss (150) in dem Wärmetauscherraum (138) mindestens ein von dem Wärmetauschermedium durchströmbarer Kanal ausgebildet ist.

8. Kryobehälter (110) nach einem der vorhergehenden Ansprüche, wobei der Sekundärbehälter (132) weiterhin mindestens ein einen Füllstand des Wärmetauschermediums in dem Wärmetauscherraum (138) kontrollierendes und/oder regulierendes Element aufweist, insbesondere ein Schwimmerventil.

9. Kryobehälter (110) nach einem der vorhergehenden Ansprüche, weiterhin umfassend einen im Wesentlichen formstabilen Außenbehälter (126), wobei der Außenbehälter (126) eingerichtet ist, um den mindestens einen Sekundärbehälter (132) mit dem darin aufgenommenen mindestens einen Primärbehälter (118) aufzunehmen und gegen mechanische Einwirkungen von außen abzuschirmen.

10. Kryobehälter (110) nach dem vorhergehenden Anspruch, wobei der Außenbehälter (126) ganz oder teilweise aus einem Papiermaterial, insbesondere umfassend eine Wellpappe, hergestellt ist.

11. Sekundärbehälter (132) zum Einsatz in einem Kryobehälter (110) nach einem der vorhergehenden Ansprüche, wobei der Sekundärbehälter (132) vorzugsweise zumindest teilweise flexibel ausgestaltet ist, wobei der Sekundärbehälter (132) mindestens eine Öffnung (133) zum Einführen des Primärbehälters (118) aufweist, wobei der Sekundärbehälter (132) mindestens eine vorzugsweise zumindest teilweise flexibel ausgestaltete Außenhülle (134) aufweist, wobei der Sekundärbehälter (132) weiterhin mindestens einen zwischen der Außenhülle (134) und dem Primärbehälter (118), insbesondere dem flexiblen Folienbeutel (120), angeordneten Wärmetauscherraum (138) zur Aufnahme mindestens eines fluiden Wärmetauschermediums aufweist.

12. Präparationsvorrichtung (112) zum Einlagern eines Mediums (124), insbesondere eines biochemischen und/oder medizinischen Produkts, umfassend mindestens einen Kryobehälter (110) nach einem der vorhergehenden, einen Kryobehälter (110) betreffenden Ansprüche, weiterhin umfassend mindestens eine an den Kryobehälter (110) reversibel ankoppelbare Bereitstellungsvorrichtung (114) zum Bereitstellen eines Wärmetauschermediums an den Kryobehälter (110).

13. Verfahren zum Lagern und/oder Transportieren eines Mediums (124), insbesondere eines biochemischen und/oder medizinischen Produkts, insbesondere unter Verwendung eines Kryobehälters (110) nach einem der vorhergehenden, einen Kryobehälter (110) betreffenden Ansprüche, wobei das Verfahren folgenden Schritte umfasst:
- ein Primärbehälter (118) wird in einen Sekundärbehälter (132) eingebracht, wobei der Primärbehälter (118) mindestens einen flexiblen Folienbeutel (120) aufweist, wobei der Sekundärbehälter (132) vorzugsweise zumindest teilweise flexibel ausgestaltet ist, wobei der Sekundärbehälter (132) mindestens eine Öffnung (133) zum Einführen des Primärbehälters (118) aufweist, wobei der Sekundärbehälter (132) mindestens eine vorzugsweise zumindest teilweise flexibel ausgestaltete Außenhülle (134) aufweist, wobei der Sekundärbehälter (132) weiterhin mindestens einen zwischen der Außenhülle (134) und dem flexiblen Folienbeutel (120) angeordneten Wärmetauscherraum (138) zur Aufnahme mindestens eines fluiden Wärmetauschermediums aufweist,
- das Medium (124) wird in den Primärbehälter (118) eingebracht, und
- mindestens ein Wärmetauschermedium wird in oder durch den Wärmetauscherraum (138) geleitet.

14. Verfahren nach dem vorhergehenden Anspruch, weiterhin umfassend den folgenden Schritt:
- der Sekundärbehälter (132) wird in mindestens einen im Wesentlichen formstabilen Außenbehälter (126) eingebracht, wobei der Außenbehälter (126) eingerichtet ist, um den mindestens einen Sekundärbehälter (132) mit dem darin aufgenommenen mindestens einen Primärbehälter (118) aufzunehmen und gegen mechanische Einwirkungen von außen abzuschirmen.

15. Verfahren nach einem der beiden vorhergehenden Ansprüche, wobei das Medium (124) eingefroren und anschließend eingelagert und/oder transportiert wird, wobei zum Einfrieren ein Wärmetauschermedium mit einer Temperatur unterhalb eines Gefrierpunkts des Mediums (124) verwendet wird.

16. Verfahren nach dem vorhergehenden Anspruch, wobei das Medium (124) nach dem Einlagern und/oder dem Transport durch Einbringen eines gasförmigen oder flüssigen Wärmetauschermediums mit einer Temperatur oberhalb eines Gefrierpunkts des Mediums (124) aufgetaut wird.

17. Verfahren nach einem der vorhergehenden Verfahrensansprüche, wobei der Primärbehälter (118) und/oder der Sekundärbehälter (132) sowie gegebenenfalls der Außenbehälter (126) nach einem Entnehmen des Mediums (124) ganz oder teilweise entsorgt werden.

## Claims

1. A cryogenic container (110) for storing and/or transporting a medium (124), in particular a biochemical and/or medical product, said cryogenic container (110) comprising at least one primary container (118), wherein the primary container (118) has at least one flexible film bag (120), wherein the flexible film bag (120) is designed to receive the medium (124), and furthermore comprising at least one secondary container (132), which at least partially surrounds the primary container (118), wherein the secondary container (132) is preferably at least partially flexible, wherein the secondary container (132) has at least one opening (133) for insertion of the primary container (118), wherein the secondary container (132) has at least one preferably at least partially flexible outer sleeve (134), wherein the secondary container (132) furthermore has at least one heat exchanger space (138), which is arranged between the outer sleeve (134) and the flexible film bag (120), for receiving at least one fluid heat exchange medium.

2. The cryogenic container (110) as claimed in the preceding claim, wherein the primary container (118) is designed as a disposable film bag (120).

3. The cryogenic container (110) as claimed in one of the preceding claims, wherein the heat exchanger space (138) has at least one spacer element (136) arranged in the heat exchanger space (138), wherein the spacer element (136) is designed such that the fluid heat exchange medium can flow through it, and wherein the spacer element (136) is furthermore designed to maintain a spacing between the outer sleeve (134) and the film bag (120).

4. The cryogenic container (110) as claimed in one of the preceding claims, wherein the outer sleeve (134) of the secondary container (132) comprises at least one metal film and/or at least one plastic film and/or paper film coated with a metallic material, in particular aluminum.

5. The cryogenic container (110) as claimed in one of the preceding claims, wherein the secondary container (132) furthermore has at least one inner sleeve (146), wherein the inner sleeve (146) faces the primary container (118) and is preferably at least partially flexible.

6. The cryogenic container (110) as claimed in one of the preceding claims, wherein the secondary container (132) is designed as a preferably at least partially flexible and at least two-walled receiving bag (144), comprising the at least one outer sleeve (134), furthermore comprising at least one preferably at least partially flexible inner sleeve (146) facing the film bag (120), and furthermore comprising the heat exchanger space (138) arranged between the outer sleeve (134) and the inner sleeve (146), wherein the outer sleeve (134) and the inner sleeve (146) are connected to each other in at least one area in such a way that the heat exchanger space (138) is substantially closed off.

7. The cryogenic container (110) as claimed in the preceding claim, wherein the receiving bag (144) furthermore has at least one first connector (148), in particular a connector port, for delivery of the heat exchange medium and at least one second connector (150), in particular a connector port, for removal of the heat exchange medium, wherein the first connector (148) and the second connector (150) are fluidically connected to the heat exchanger space (138), wherein at least one channel through which the heat exchange medium can flow is formed in the heat exchanger space (138) between the first connector (148) and the second connector (150).

8. The cryogenic container (110) as claimed in one of the preceding claims, wherein the secondary container (132) furthermore has at least one element controlling and/or regulating a filling level of the heat exchange medium in the heat exchanger space (138), in particular a float valve.

9. The cryogenic container (110) as claimed in one of the preceding claims, furthermore comprising a substantially dimensionally stable outer container (126), wherein the outer container (126) is designed to receive the at least one secondary container (132), with the at least one primary container (118) received therein, and to shield them against external mechanical action.

10. The cryogenic container (110) as claimed in the preceding claim, wherein the outer container (126) is made completely or partially from a paper material, in particular comprising a corrugated board.

11. A secondary container (132) for use in a cryogenic container (110) as claimed in one of the preceding claims, wherein the secondary container (132) is preferably at least partially flexible, wherein the secondary container (132) has at least one opening (133) for insertion of the primary container (118), wherein the secondary container (132) has at least one preferably at least partially flexible outer sleeve (134), wherein the secondary container (132) furthermore has at least one heat exchanger space (138), which is arranged between the outer sleeve (134) and the primary container (118), in particular the flexible film bag (120), for receiving at least one fluid heat exchange medium.

12. Preparation device (112) for storage of a medium (124), in particular a biochemical and/or medical product, said preparation device (112) comprising at least one cryogenic container (110) as claimed in one of the preceding claims relating to a cryogenic container (110), furthermore comprising at least one supply device (114) that can be coupled reversibly to the cryogenic container (110) for supplying a heat exchange medium to the cryogenic container (110).

13. A method for storing and/or transporting a medium (124), in particular a biochemical and/or medical product, in particular using a cryogenic container (110) as claimed in one of the preceding claims relating to a cryogenic container (110), wherein the method comprises the following steps:
- a primary container (118) is introduced into a secondary container (132), wherein the primary container (118) has at least one flexible film bag (120), wherein the secondary container (132) is preferably at least partially flexible, wherein the secondary container (132) has at least one opening (133) for insertion of the primary container (118), wherein the secondary container (132) has at least one preferably at least partially flexible outer sleeve (134), wherein the secondary container (132) furthermore has at least one heat exchanger space (138), which is arranged between the outer sleeve (134) and the flexible film bag (120) for receiving at least one fluid heat exchange medium,
- the medium (124) is introduced into the primary container (118), and
- at least one heat exchange medium is conveyed into or through the heat exchanger space (138).

14. The method as claimed in the preceding claim, furthermore comprising the following step:
- the secondary container (132) is introduced into at least one substantially dimensionally stable outer container (126), wherein the outer container (126) is designed to receive the at least one secondary container (132), with the at least one primary container (118) received therein, and to shield them against external mechanical action.

15. The method as claimed in one of the two preceding claims, wherein the medium (124) is frozen and then stored and/or transported, wherein a heat exchange medium with a temperature below a freezing point of the medium (124) is used for freezing.

16. The method as claimed in the preceding claim, wherein the medium (124), after it has been stored and/or transported, is thawed by introduction of a gaseous or liquid heat exchange medium with a temperature above a freezing point of the medium (124).

17. The method as claimed in one of the preceding method claims, wherein the primary container (118) and/or the secondary container (132) and also, if appropriate, the outer container (126) are completely or partially disposed of after the medium (124) has been removed.

## Revendications

1. Contenant cryogénique (110) destiné au stockage et/ou au transport d'un médium (124), en particulier d'un produit biochimique et/ou médical, comprenant au moins un contenant primaire (118), dans lequel le contenant primaire (118) présente au moins un sac en feuille flexible (120), dans lequel le sac en feuille flexible (120) est destiné à contenir le médium (124), comprenant en outre au moins un contenant secondaire (132) entourant au moins partiellement le contenant primaire (118), dans lequel le contenant secondaire (132) est de préférence au moins partiellement flexible, dans lequel le contenant secondaire (132) présente au moins une ouverture (133) pour l'introduction du contenant primaire (118), dans lequel le contenant secondaire (132) présente au moins une enveloppe extérieure (134) de préférence au moins partiellement flexible, dans lequel le contenant secondaire (132) présente en outre au moins une chambre d'échangeur de chaleur (138) disposée entre l'enveloppe extérieure (134) et le sac en feuille flexible (120), et destinée à contenir au moins un milieu fluide d'échangeur de chaleur.

2. Contenant cryogénique (110) selon la revendication précédente, dans lequel le contenant primaire (118) est constitué par un sac en feuille (120) à usage unique.

3. Contenant cryogénique (110) selon l'une quelconque des revendications précédentes, dans lequel la chambre d'échangeur de chaleur (138) présente au moins un élément d'écartement (136) disposé dans la chambre d'échangeur de chaleur (138), dans lequel l'élément d'écartement (136) peut être traversé par le milieu fluide d'échangeur de chaleur et dans lequel l'élément d'écartement (136) est en outre constitué pour maintenir une distance entre l'enveloppe extérieure (134) et le sac en feuille (120).

4. Contenant cryogénique (110) selon l'une quelconque des revendications précédentes, dans lequel l'enveloppe extérieure (134) du contenant secondaire (132) comprend au moins une feuille métallique et/ou au moins une feuille de plastique et/ou de papier revêtue d'un matériau métallique, en particulier d'aluminium.

5. Contenant cryogénique (110) selon l'une quelconque des revendications précédentes, dans lequel le contenant secondaire (132) présente en outre au moins une enveloppe intérieure (146), dans lequel l'enveloppe intérieure (146) est tournée vers le contenant primaire (118) et est de préférence au moins partiellement flexible.

6. Contenant cryogénique (110) selon l'une quelconque des revendications précédentes, dans lequel le contenant secondaire (132) est de préférence au moins partiellement flexible et est constitué par un sac de réception (144) au moins à double paroi, comprenant ladite au moins une enveloppe extérieure (134), comprenant en outre au moins une enveloppe intérieure (146) tournée vers le sac en feuille (120) et de préférence au moins partiellement flexible, comprenant en outre la chambre d'échangeur de chaleur (138) disposée entre l'enveloppe extérieure (134) et l'enveloppe intérieure (146), dans lequel l'enveloppe extérieure (134) et l'enveloppe intérieure (146) sont assemblées l'une à l'autre dans au moins une région, de telle manière que la chambre d'échangeur de chaleur (138) soit essentiellement fermée.

7. Contenant cryogénique (110) selon la revendication précédente, dans lequel le sac de réception (144) présente en outre au moins un premier raccord (148), en particulier un embout de raccord, pour amener le fluide d'échangeur de chaleur, et au moins un deuxième raccord (150), en particulier un embout de raccord, pour évacuer le fluide d'échangeur de chaleur, dans lequel le premier raccord (148) et le deuxième raccord (150) sont en communication fluidique avec la chambre d'échangeur de chaleur (138), dans lequel au moins un canal pouvant être parcouru par le fluide d'échangeur de chaleur est formé dans la chambre d'échangeur de chaleur (138) entre le premier raccord (148) et le deuxième raccord (150).

8. Contenant cryogénique (110) selon l'une quelconque des revendications précédentes, dans lequel le contenant secondaire (132) présente en outre au moins un élément contrôlant et/ou régulant un niveau de remplissage du fluide d'échangeur de chaleur dans la chambre d'échangeur de chaleur (138), en particulier une soupape à flotteur.

9. Contenant cryogénique (110) selon l'une quelconque des revendications précédentes, comprenant en outre un contenant extérieur (126) de forme essentiellement stable, dans lequel le contenant extérieur (126) est constitué pour contenir ledit au moins un contenant secondaire (132) avec ledit au moins un contenant primaire (118) logé dans celui-ci, et le protéger contre des actions mécaniques venant de l'extérieur.

10. Contenant cryogénique (110) selon la revendication précédente, dans lequel le contenant extérieur (126) est fabriqué entièrement ou partiellement en un matériau dérivé du papier, comprenant en particulier un carton ondulé.

11. Contenant secondaire (132) à utiliser dans un contenant cryogénique (110) selon l'une quelconque des revendications précédentes, dans lequel le contenant secondaire (132) est de préférence au moins partiellement flexible, dans lequel le contenant secondaire (132) présente au moins une ouverture (133) pour l'introduction du contenant primaire (118), dans lequel le contenant secondaire (132) présente au moins une enveloppe extérieure (134) de préférence au moins partiellement flexible, dans lequel le contenant secondaire (132) présente en outre une chambre d'échangeur de chaleur (138) disposée entre l'enveloppe extérieure (134) et le contenant primaire (118), en particulier le sac en feuille flexible (120), et destinée à contenir au moins un milieu fluide d'échangeur de chaleur.

12. Dispositif de préparation (112) destiné au stockage d'un médium (124), en particulier d'un produit biochimique et/ou médical, comprenant au moins un contenant cryogénique (110) selon l'une quelconque des revendications précédentes relatives à un contenant cryogénique (110), comprenant en outre au moins un dispositif d'approvisionnement (114) pouvant être couplé de façon réversible au contenant cryogénique (110) afin de fournir un fluide d'échangeur de chaleur au contenant cryogénique (110).

13. Procédé pour le stockage et/ou le transport d'un médium (124), en particulier d'un produit biochimique et/ou médical, en particulier en utilisant un contenant cryogénique (110) selon l'une quelconque des revendications précédentes relatives à un contenant cryogénique (110), dans lequel le procédé comprend les étapes suivantes:
- on introduit un contenant primaire (118) dans un contenant secondaire (132), dans lequel le contenant primaire (118) présente au moins un sac en feuille flexible (120), dans lequel le contenant secondaire (132) est de préférence au moins partiellement flexible, dans lequel le contenant secondaire (132) présente au moins une ouverture (133) pour l'introduction du contenant primaire (118), dans lequel le contenant secondaire (132) présente au moins une enveloppe extérieure (134) de préférence au moins partiellement flexible, dans lequel le contenant secondaire (132) présente en outre au moins une chambre d'échangeur de chaleur (138) disposée entre l'enveloppe extérieure (134) et le sac en feuille flexible (120), et destinée à contenir au moins un milieu fluide d'échangeur de chaleur,
- on introduit le médium (124) dans le contenant primaire (118), et
- on conduit au moins un milieu d'échangeur de chaleur dans ou à travers la chambre d'échangeur de chaleur (138).

14. Procédé selon la revendication précédente, comprenant en outre l'étape suivante:
- on introduit le contenant secondaire (132) dans au moins un contenant extérieur (126) de forme essentiellement stable, dans lequel le contenant extérieur (126) est constitué pour contenir ledit au moins un contenant secondaire (132) avec ledit au moins un contenant primaire (118) logé dans celui-ci et le protéger contre des actions mécaniques venant de l'extérieur.

15. Procédé selon l'une quelconque des deux revendications précédentes, dans lequel on congèle le médium (124) et ensuite on le stocke et/ou on le transporte, dans lequel on utilise pour la congélation un milieu d'échangeur de chaleur ayant une température située en dessous d'un point de congélation du médium (124).

16. Procédé selon la revendication précédente, dans lequel, après le stockage et/ou le transport, on décongèle le médium (124) en introduisant un milieu d'échangeur de chaleur gazeux ou liquide ayant une température située au-dessus d'un point de congélation du médium (124).

17. Procédé selon l'une quelconque des revendications de procédé précédentes, dans lequel on élimine entièrement ou partiellement le contenant primaire (118) et/ou le contenant secondaire (132) ainsi qu'éventuellement le contenant extérieur (126) après un prélèvement du médium (124).
